# EUROPEAN PATENT APPLICATION

(11) **EP 1 690 763 A1**
(43) Date of publication of application: **16.08.2006**
(21) Application number: 04799838.0
(22) Date of filing: 19.11.2004
(51) Int. Cl.: B60T 7/06

(54) **BRAKE PEDAL DEVICE**

(30) Priority: 25.11.2003 JP 2003393744
(71) Applicant: Bosch Corporation, Shibuya-ku Tokyo 150-8360 (JP)
(72) Inventor: WACHI, Yuji, BOSCH AUTOMOTIVE SYSTEMS CORPORATION, Higashimatsuyama-shi, Saitama 3558602 (JP); OKA, Hiroyuki BOSCH AUTOMOTIVE SYSTEMS, Higashimatsuyama-shi, Saitama 3558602 (JP); KOMIYA, Masataka BOSCH AUTOMOTIVE SYSTEMS, Higashimatsu-shi, Saitama 3558602 (JP)
(74) Representative: Vossius & Partner
(86) International application number: PCT/JP2004/017636
(87) International publication number: WO 2005/051736

(57) **Abstract**

In a brake pedal apparatus (50) of the invention, an engagement condition between an engagement means (15) and an L-shaped member (43) is maintained and a second lever member (2a₂) pivots with a second pivot shaft (13) being the center, setting a small lever ratio, if a pedal force (Fp) is equal toorlessthanasetvalue (Fₚ₀) whenabrakepedal (2) isdepressed while the engaging means (15) and the L-shaped member (43) are in the engagement condition. If the pedal force (Fₚ) exceeds the set value (Fₚ₀), the engagement between the engaging means (15) and the L-shaped member (43) is cancelled, and the engaging means (15) moves while causing the L-shaped member (43) to pivot. An engaging-and-connecting lever (45) disengages from a linear portion (43b), and the engaging-and-connecting lever (45) pivots so that its latch pawl latches onto teeth (47a) of the second lever member (2a₂), joining the first and second lever members (2a₁), (2a₂) unitarily. Thereby, a lever ratio is changed, and a large lever ratio is set.

## Description

### BACKGROUND ART

The present invention relates to the technical field of brake pedal apparatus for inputting an operator's operating force for the purpose of braking with a brake apparatus, and more particularly to the technical field of brake pedal apparatus in which the pedal ratio is variable.

With brake systems for vehicles such as automobiles, a brake is often generally actuated by a force for depressing a break pedal.

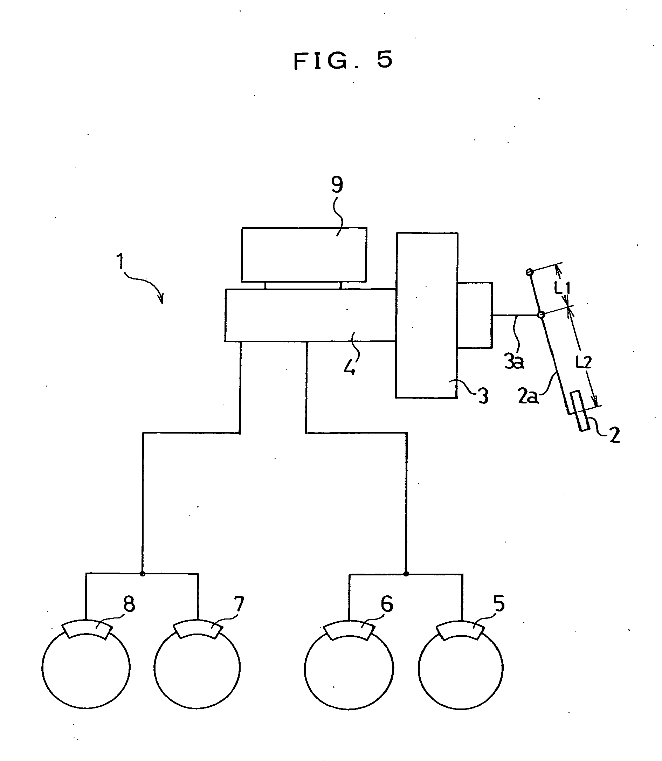

Fig. 5 is a view for schematically showing the basic structure of a conventional break apparatus for general use with such a brake pedal. Fig. 5 shows the following: numeral 1 denotes a brake apparatus; numeral 2 denotes a brake pedal for performing a brake operation; numeral 2a represents a lever; numeral 3 denotes a booster for boosting a pedal force of the brake pedal 2 by the power of liquid pressure, negative pressure, or air pressure (positive pressure) for outputting it; numeral 3a denotes an input shaft of the booster 3; numeral 4 denotes a tandem-type master cylinder (hereafter also referred to as "MCY") that is actuated by the output of the booster 3 to generate a master cylinder pressure; numerals 5 and 6 denote wheel cylinders (hereafter referred to as "WCY") for a first brake system, to which an MCY pressure of the MCY 4 is supplied as a brake pressure to generate a brake force; numerals 7 and 8 denote WCYs for a second brake system, to which the MYC pressure of the MCY 4 is supplied as a brake pressure to generate a brake force; and numeral 9 denotes a reservoir of the MCY 4.

In this brake apparatus 1, the input shaft 3a of the booster 3 moves forward (moves leftward in Fig. 5) by depression of the brake pedal 2, and the booster 3 boosts the pedal force and outputs it. The output of the booster 3 causes the MCY 4 to generate the MCY pressure, and the MCY pressure is respectively supplied to each of the WCYs 5, 6, 7, and 8, whereby a brake is operated with a great force resulting from the boosted pedal force.

In a brake apparatus 1 as described above, a pedal ratio (L1 + L2)/L1 of the lever 2a of the brake pedal 2 is typically in many cases invariable. Here, L1 represents the distance between the pivot center point of the lever 2a and the connection point at which the input shaft 3a of the booster 3 is connected to the lever 2a, and L2 represents the distance between this connection point and the center point of the brake pedal 2.

When the pedal ratio is invariable as described above, the following problems arise.
(1) The pedal force becomes large when the boost power failure of the booster 3 occurs (for example, at the time of power source failure).
(2) Depending on circumstances, there are cases in which the pedal stroke becomes large, resulting in unsuitable feel.
(3) In emergency braking, there are cases in which a large brake force cannot be produced by beginners or the like.
(4) At the time of vehicle collision, there are cases in which the brake pedal moves toward driver's side greatly.
(5) When attempting to set the brake pad at a large space from a brake disk or a brake drum in order to improve fuel economy by preventing the dragging of W/C (although a very large space cannot be made since it is necessary to take into account the stroke loss of the brake pedal 2), the pedal stroke becomes larger accordingly.

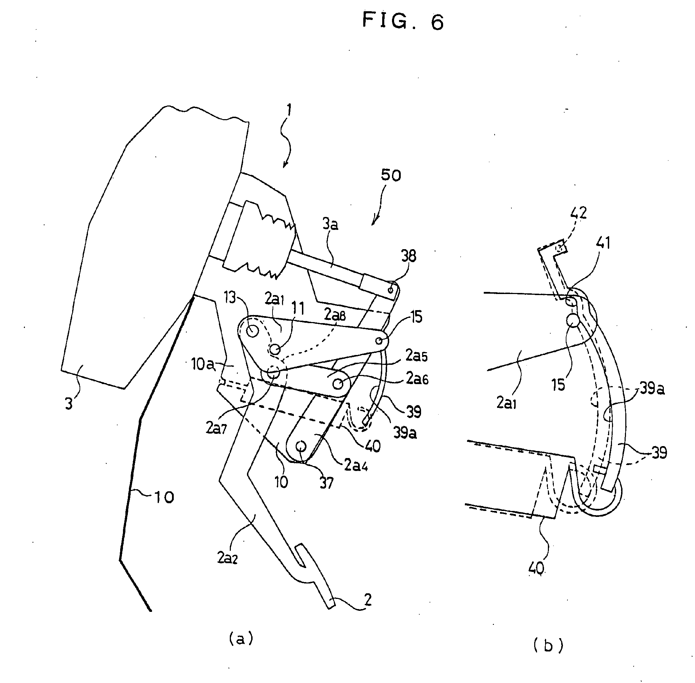

In view of this, JP-A-2002-347590 proposes a brake pedal apparatus that can solve the foregoing problems by making the pedal ratio variable easily. Fig 6 schematically shows the brake pedal apparatus disclosed in JP-A-2002-347590, wherein (a) is a front view similar to Fig. 5 and (b) is a partially-enlarged view showing the state immediately after the pedal ratio has been varied. It should be noted that the brake apparatus 1 shown in Fig. 5 is also disclosed in JP-A-2002-347590, so in the brake apparatus 1 equipped with a brake pedal apparatus 50, which is shown in Figs. 6(a) and 6 (b), the same elements as those of the brake apparatus 1 shown in Fig. 5 are designated by the same reference numerals and the detailed description thereof will be omitted. Although some of the elements in the brake apparatus 1 shown in Fig. 5, such as the MCY 4, the WCYs 5, 6, 7, and 8, and the reservoir 9 are not shown in Fig. 6(a), the brake apparatus 1 shown in Fig. 6(a) is, of course, also furnished with these elements.

Further, Figs. 6 (a) and 6 (b) show the following; numeral 2a₁ denotes a first lever member provided pivotably onto a bracket 10a attached on the vehicle body 10 (for example, on a toe board) with a first pivot shaft 11; numeral 2a₂ denotes a second lever member, on one end (the lower end) of which the brake pedal 2 is provided and the other end (the upper end) of which is connected relatively pivotably to one end of the first lever member 2a₁ (the left end that is further leftward than the first pivot shaft 11) with a second pivot shaft 13; numeral 2a₄ denotes a third lever member, one end (the lower end) of which is pivotably connected to the bracket 10a by a shaft 37 and the other end (the upper end) of which is relatively pivotably connected to an input shaft 3a of the booster 3 by a shaft 38; numeral 2a₅ denotes a fourth lever member that connects the mid portion of the second lever member 2a₂ (the portion closer to the brake pedal 2 than the location of the first pivot shaft 11) to a mid portion of the third lever member 2a₄ with two shafts 2a₇ and 2a₆; numeral 2a₈ denotes a stop portion that is provided for the second lever member 2a₂ and is abuttable onto the first pivot shaft 11; numeral 15 denotes a pin-shaped engaging means provided to the other end of the first lever member 2a₁ (the right end right to the first pivot shaft 11) ; numeral 39 denotes an arc-shaped member made of a rigid body, one end of which is pivotably supported on the bracket 10a by a pivot shaft 42 and which has an arc-shaped surface 39a onto which the engaging means 15 abuts at all times; numeral 40 denotes a spring provided in a contracted state between the other end of the arc-shaped member 39 and the bracket 10a in such a manner that it urges the arc-shaped member 39 clockwise in Figs. 6(a) and 6(b) at all times; and numeral 41 denotes a retaining portion composed of a V-shaped groove, which is provided to the arc-shaped member 39 and into which the engaging means 15 can engage.

When in an inoperative condition, the thus-configured brake pedal apparatus 50 shown in Figs. 6 (a) and 6(b) is kept in a state in which the engaging means 15 is engaged in the retaining portion 41 by the spring force of the spring 40, and the stop portion 2a₈ abuts on the first pivot shaft 11, which is shown in Fig 6(a).

When the brake pedal 2 is depressed in a normal manner from this inoperative condition, the pedal force Fₚ does not reach a set value Fₚ₀, that is, a pedal-ratio change condition is not established. For this reason, the second lever member 2a₂ is caused to pivot clockwise in Fig. 6 (a) with the connection shaft 2a₇ being the center, and as a consequence, the second lever member 2a₂ causes the first lever member 2a₁ to pivot clockwise via the second pivot shaft 13, with the first pivot shaft 11 being the center. However, since this pivot force of the first lever member 2a₁ effected by the second lever member 2a₂ is small, the engaging means 15 does not disengage from the retaining portion 41 and is kept engaged in the retaining portion 41. Accordingly, the first lever member 2a₁ does not pivot and only the second lever member 2a₂ pivots clockwise in Fig. 6 (a) , with the second pivot shaft 13 being the center. Consequently, the third lever member 2a₄ pivots counterclockwise via the fourth lever member 2a₅, with the shaft 37 being the center, and the input shaft 3a strokes forward, actuating the booster 3, whereby a normal brake is operated. When releasing the brake pedal 2, each of the lever members 2a₄, 2a₅, and 2a₂ pivots in an opposite, inoperative direction, and the brake pedal apparatus 50 enters an inoperative condition shown in Fig. 6(a), whereby the normal brake is released.

For example, when the brake pedal 2 is depressed more strongly than usual because of emergency braking or the like, the pedal force Fₚ is the set value Fₚ₀ or higher; that is, the pedal-ratio change condition is established. Accordingly, since the pivot force of the first lever member 2a₁ effected by the second lever member 2a₂ is great, the engaging means 15 disengages from the retaining portion 41, as shown in Fig. 6 (a) , and the first lever member 2a₁ pivots clockwise in Fig. 6 (b) , with the first pivot shaft 11 being the center, and the second lever member 2a₂ pivots in the same direction, with the connection shaft 2a₇ being the center.

At this time, the engagingmeans 15 shifts from the abutting surface of the V-shaped groove of the retaining portion 41 to the abutting surface of the arc-shaped member surface 39a of the arc-shaped member 39, while abutting against the abutting surfaces such that the contact angle (specifically, the contact angle with the first lever member 2a₁ and the arc-shaped member 39) does not change continuously but changes abruptly. In addition, since the pivot amount of the first lever member 2a₁ is greater than that of the second lever member 2a₂, the first pivot shaft 11 immediately abuts, at the beginning of the pedal depression, onto the stop portion 2a₈ of the second lever member 2a₂, which is slightly spaced from the first pivot shaft 11, resulting in a balanced position between the first lever member 2a₁ and the second lever member 2a₂. Thereafter, the first lever member 2a₁ and the second lever member 2a₂ pivot unitarily with the first pivot shaft 11 being the center. Thus, the pedal ratio is changed into a greater pedal ratio than that at the time of normal pedal depression. That is, the MCY pressure has so-called inverse two-stage characteristics in which as the pedal force Fₚ increases, the MCY pressure increases with a greater boosting ratio than that in conventional ones.

When the pedal force Fₚ is the set value Fₚ₀ or higher, at the time of boosting power failure by the booster 3 as well, the pedal ratio is likewise changed to be greater. Therefore, the MCY pressure linearly increases to a much greater value than it conventionally increases in accordance with the increase of the pedal ratio, assisting the brake force.

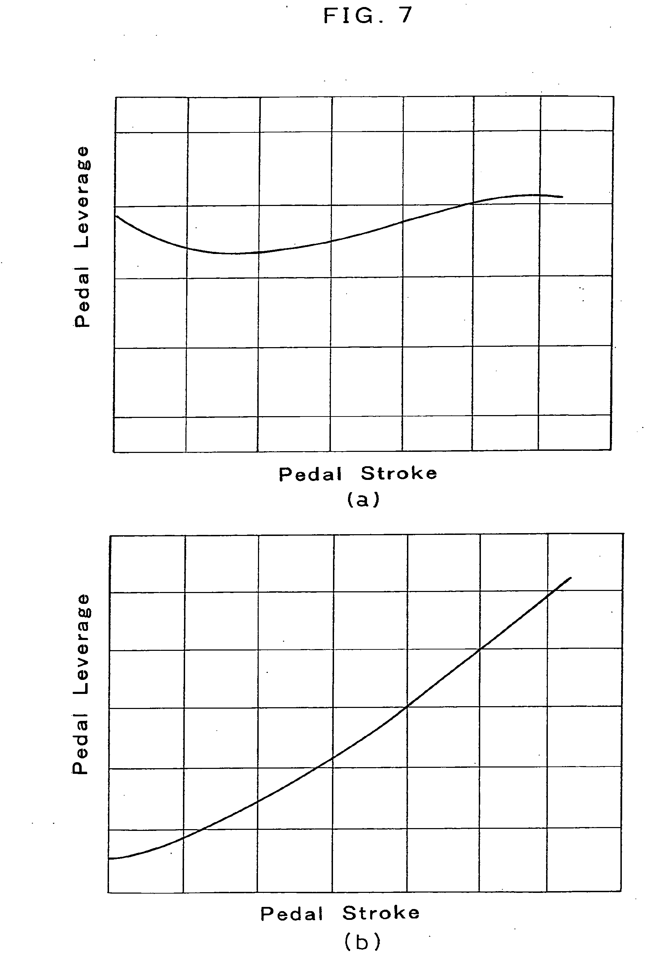

Furthermore, the pedal stroke-pedal ratio profile of this brake pedal apparatus 50 shows the characteristics as follows. When the engaging means 15 is in a state in which it is engaged with the retaining portion 41, the pedal ratio is considered mostly invariable, although the pedal ratio slightly decreases initially and thereafter slightly increases with respect to the increase in the pedal stroke, as shown in Fig 7 (a). On the other hand, when the engaging means 15 is disengaged from the retainingportion 41, the pedal ratio increases in accordance with the increase in the pedal stroke, as shown in Fig. 7(b).

Since this brake pedal apparatus 50 has two lever members, the third lever member 2a₄ and the forth lever member 2a₅, the brake pedal apparatus 50 can be disposed under the input shaft 3a of the booster 3, as shown in Fig. 6(a). Thereby, freedom in arrangement of the pedal apparatus 50 improves, and the total length of the assembled body of the pedal apparatus 50, the booster 3, and the master cylinder 4 can be shortened.

Nevertheless, in the conventional brake pedal apparatus 50 shown in Fig. 6(a), the pin-shaped engaging means 15 is engaged with the V-shaped groove of the retaining portion 41, and therefore, a considerably large friction force is produced between the engaging means 15 and the retaining portion 41 when the pedal-ratio change condition is established and the engaging means 15 is disengaged from the V-shaped groove of the retaining portion 41. It is desirable that the friction force should be reduced as much as possible and thereby the pedal ratio is changed smoothly to obtain a better pedal feel.

### DISCLOSURE OF THE INVENTION

It is an object of the invention to provide a brake pedal apparatus that makes it possible to change the pedal ratio easily and more smoothly to obtain a better pedal feel.

In order to achieve the foregoing object, a brake pedal apparatus of the invention comprises: a first lever member whose mid portion is pivotably supported on a vehicle body by a first pivot shaft; a second lever member having a pedal on an end thereof and being relatively pivotably connected to an end of the first lever member by a second pivot shaft, to which an input shaft of a booster or of a master cylinder is pivotably coupled; a pivot-inhibiting control means for controlling pivoting of the first lever member so that the first lever member is inhibited from pivoting when a predetermined condition is not established while the first lever member is permitted to pivot when the predetermined condition is established; and a joining means for causing the second lever member to pivot together with the first lever member, with the first pivot shaft being a pivot center, when the first lever member is permitted to pivot, the brake pedal apparatus characterized in that: the pivot-inhibiting control means comprises an engaging means provided on the first lever member, and a shift-inhibiting control means having an abutting surface onto which the engaging means abuts and being for inhibiting the engaging means from shifting so as to keep its engagement with the engaging means when the predetermined condition is not established, and for permitting the engaging means to shift so as to cancel its engagement with the engaging means when the predetermined condition is established; and the abutting surface of the shift-inhibiting control means is an abutting surface whose shape does not change abruptly.

In addition, the invention is characterized in that: the joining means includes a catch member provided on the first lever member and a connecting member provided on the second lever member and being latchable onto the catch member; and the connecting member is configured to be controlled by the shift-inhibiting control means so that it does not latch onto the catch member when the predetermined condition is not established while it latches onto the catch member when the predetermined condition is established.

Further, the invention is characterized in that: the catching member has a predetermined number of tooth (teeth) or groove (s), and the connecting member is provided pivotably on the second lever member and includes an engaging-and-connecting lever having a latch pawl being latchable with the tooth (teeth) or the groove(s); and the engaging-and-connecting lever is controlled by the shift-inhibiting control means so that the engaging-and-connecting lever is set at a position such that the latch pawl does not latch with the tooth (teeth) or groove (s) when the predetermined condition is not established, while the engaging-and-connecting lever is set at a position such that the latch pawl latches with the tooth (teeth) or groove (s) when the predetermined condition is established.

With the thus-configured brake pedal apparatus according to the invention, the abutting surface of the shift-inhibiting control means against the engaging means is formed so as not to change abruptly; therefore, the resistance (friction) caused by the shift of the engaging means can be reduced when the engagement relation is cancelled between the engaging means and the shift-inhibiting control means when the pedal ratio changes. Accordingly, the cancellation of the engagement relation between the engaging means and the shift-inhibiting control means, that is, the pedal ratio change, can be smoothly performed. Thereby, the pedal feel associated with the change in the pedal ratio can be improved further than a conventional pedal feel.

Moreover, with the brake pedal apparatus of the invention, the first lever member and the second lever member are unified by controlling the connecting member with the shift-inhibiting control means that can reduce the friction caused by the shift of the engaging means. Therefore, the contact noise produced at the time of unification of the first lever member and the second lever member can be prevented, and the pedal ratio when the first and second lever members are unified can be set nearly at a desired pedal ratio. Thereby, pedal feel can be improved further.

Moreover, the brake pedal apparatus of the inventionmakes it possible to change the pedal ratio with a simple structure because the connecting member is structured by the engaging-and-connecting lever and the latch pawl of the engaging-and-connecting lever is configured to latch onto the tooth (teeth) or the groove(s) of the catch member.

### BRIEF DESCRIPTION OF THE DRAWINGS

Fig. 1 is a front view schematically showing a state before the pedal ratio is changed in one example of the embodiment of the brake pedal apparatus according to the invention.
Fig. 2 shows a cross-sectional view (a) taken along a IIA-IIA line in Fig. 1, and a right-side view (b) of Fig. 1.
Fig. 3 schematically shows a state immediately after the pedal ratio has been changed in the brake pedal apparatus of the example shown in Fig. 1, wherein (a) is a front view thereof and (b) is an partially enlarged view of (a).
Fig 4 schematically shows an engaging-and-connecting lever and the catch member of the brake pedal apparatus of the example shown in Fig. 1, wherein (a) is a view showing a state in which an engaging-and-connecting lever and a catch member do not latch each other, and (b) is a view showing a state in which the engaging-and-connecting lever and a catch member are latched with each other.
Fig. 5 is a view schematically showing a conventional brake apparatus for general use.
Fig. 6 schematically shows the brake pedal apparatus disclosed in JP2002-347590, wherein (a) is a front view similar to Fig. 5, and (b) is a partially enlarged view showing a state immediately after the pedal ratio has been changed.
Fig. 7 shows the pedal stroke-pedal ratio profile in the brake pedal apparatus of the example shown in Fig. 1 and the brake pedal apparatus disclosed in JP2002-34590. (a) is a graph that shows the pedal stroke pedal ratio characteristics when the engaging means 15 engages to the L-shaped member 43 or the retaining portion 41. (b) is a graph that shows the pedal stroke pedal ratio characteristics when the engagement of the engaging means 15 with the L-shaped member 43 or the retaining portion 41 is cancelled.

### BEST MODE FOR CARRYING OUT THE INVENTION

Hereinbelow, the best mode for carrying out the invention will be described with reference to the drawings.

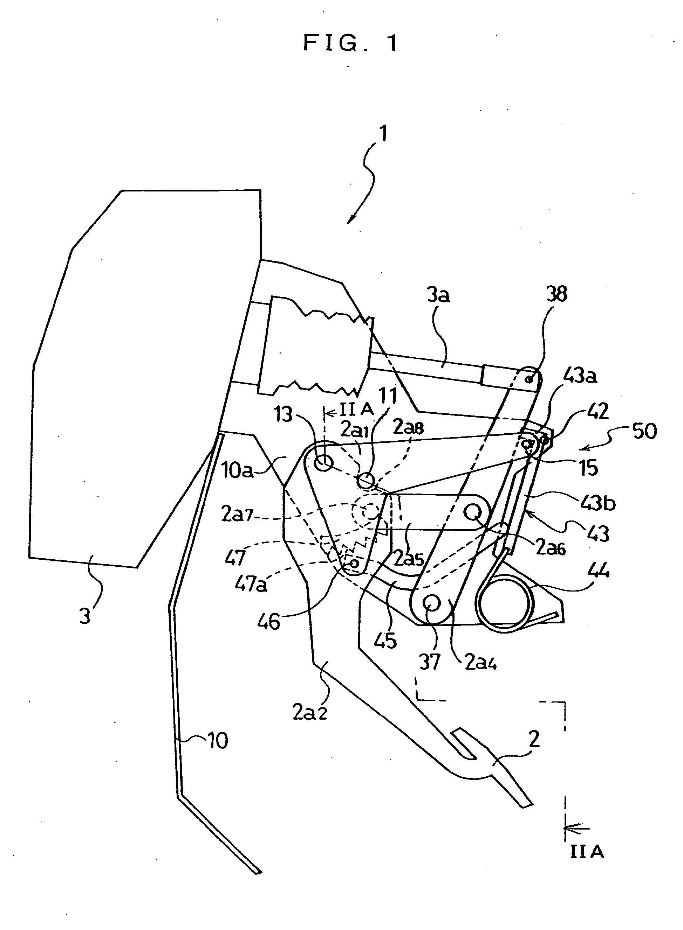

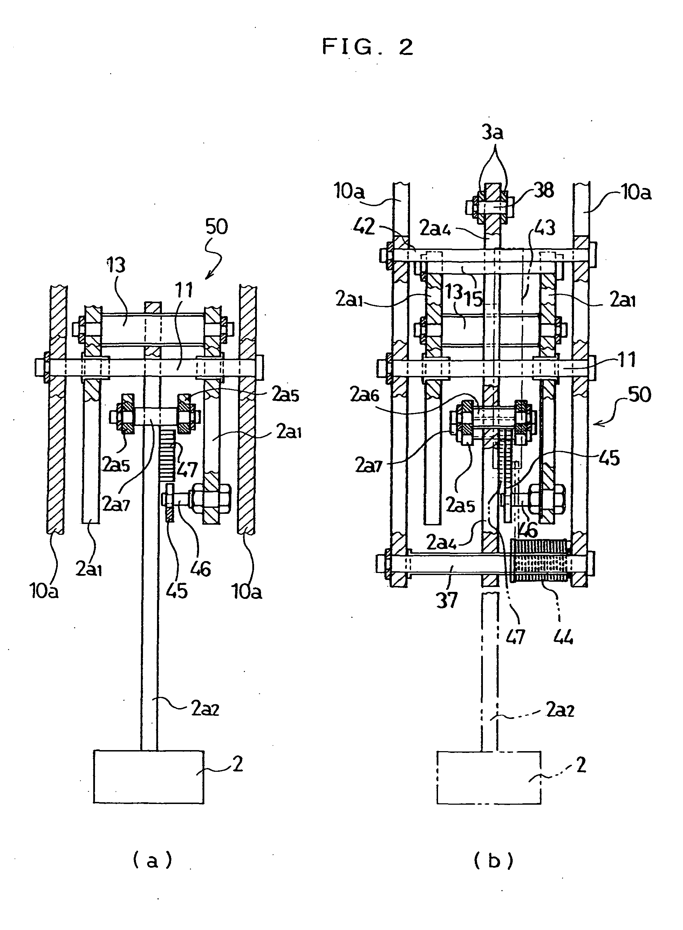

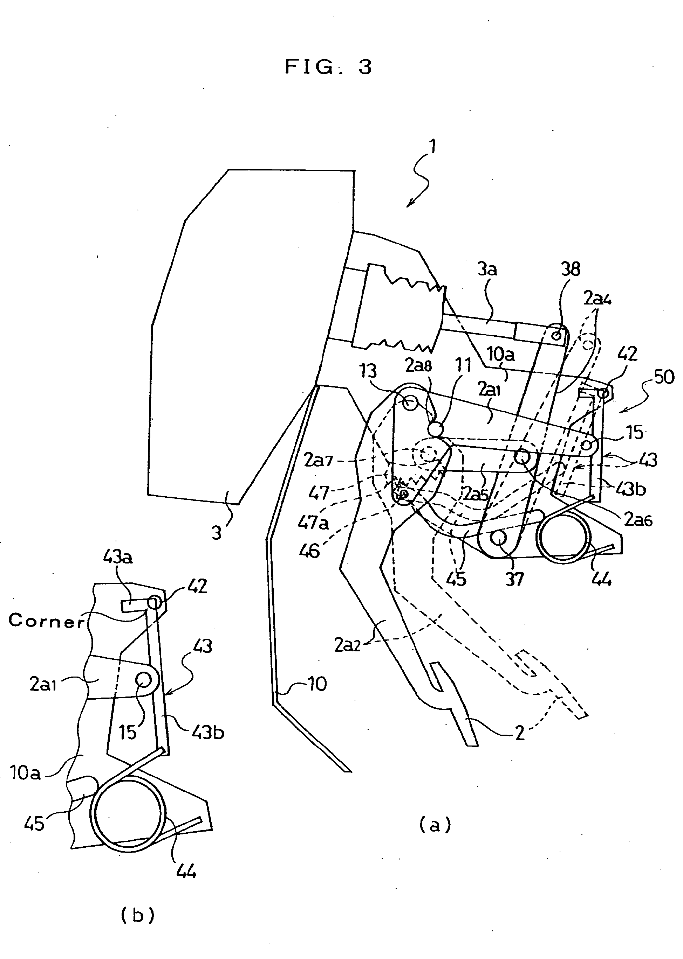

Fig 1 is a front view schematically showing a state before the pedal ratio is changed in one example of the embodiment of the brake pedal apparatus according to the invention. Fig. 2(a) is a cross-sectional view taken along a IIA-IIA line in Fig. 1 (a partial cross-sectional view in which a shaft support portion passes through the center of the shaft). Fig. 2(b) is a right-side view of Fig. 1 (a view from which some of the elements are omitted and that shows a cross section in which the shaft support portion passes through the center of the shaft). Fig. 3 schematically shows a state immediately after the pedal ratio has been changed in the brake pedal apparatus of this example, wherein (a) is a front view thereof and (b) is a partially enlargedviewof (a). It should be noted that in a brake apparatus equipped with the brake pedal apparatus of this example, the same components as those of the brake apparatus disclosed in JP-A-2002-347590, shown in the foregoing Figs. 5, 6(a), and 6(b) are designated by the same reference numerals, whereby the detailed description thereof is omitted.

As shown in Fig. 1, most of the structure of the brake pedal apparatus 50 in the brake apparatus 1 of this example is the same as the conventional brake pedal apparatus 50, shown in Figs. 6 (a) and 6 (b) ; therefore, only the structures different from the conventional brake pedal apparatus 50 will be described, the same structures will not be elaborated upon further. Likewise, the structures of the brake apparatus 1 other than the structures of the brake pedal apparatus 50 shown in Fig. 1 are not shown as with the brake apparatus 1 shown in Fig. 6(a), the brake apparatus 1 of Fig. 1 is equipped with a MCY 4, WCTs 5, 6, 7, and 8, and a reservoir 9, which are the same as those of the brake apparatus 1 shown in Fig. 5.

Although the first lever member 2a₁ shown in Figs. 6(a) and 6 (b) is formed almost in a linear shape, a first lever member 2a₁ in the brake pedal apparatus 50 of this example is formed in an inverted "V"-shape, as shown in Figs. 1 and 2 (a) and 2 (b). The inverted "V"-shaped first lever member 2a₁ is pivotably supported by a bracket 10a at its angular portion via a first pivot shaft 11, and is relatively pivotably connected to the first lever member 2a₂ at a position that is above and on the left of the first pivot shaft 11, which is at the angular portion of the first lever member 2a₁.

The brake pedal apparatus 50 of this example is also equipped with an L-shaped rigid-body member 43 and a torsion spring 44, in place of the arc-shaped rigid-body member 39 and the spring 40 that urges this arc-shaped member 39 shown in Figs. 6(a) and 6(b).

The L-shaped member 43 includes a shorter linear portion 43a and a longer linear portion 43b, and is pivotably supported on the bracket 10a via the pivot shaft 42 at an angular portion of these linear portions 43a and 43b. In that case, the longer linear portion 43b of the L-shaped member 43 is not equipped with the retaining portion 41 shown in Fig. 6(b), which is composed of the V-shaped groove.

Furthermore, the torsion spring 44 is supported on the bracket 10a, and one end of the torsion spring 44 is secured to the bracket 10a while the other end is securely connected to an end of the longer linear portion 43b of the L-shaped member 43 (the opposite end to the pivot shaft 42). By the spring force of the torsion spring 44, the L-shaped member 43 is urged clockwise in Fig. 1 at all times. When the brake pedal apparatus 50 is in an inoperative condition and in a normal condition (the condition before the pedal ratio change), a pin-shaped engagingmeans 15 of the first lever member 2a₁ is abutted against the surface of the L-shaped member 43 that opposes the engaging means 15 at the angular portion of the two linear portions 43a and 43b. The engaging means 15 is configured so as to shift along the linear portion 43b of the angular portion of the L-shaped member 43 with which the contact angle changes simply and continuously and does not change abruptly while abutting against it, from the longer linear portion 43b. The engaging means 15 is abutted against the opposing surface of the linear portion 43b at all times, and the spring force of the torsion spring 44 is applied to the engaging means 15 through the L-shaped member 43 at all times.

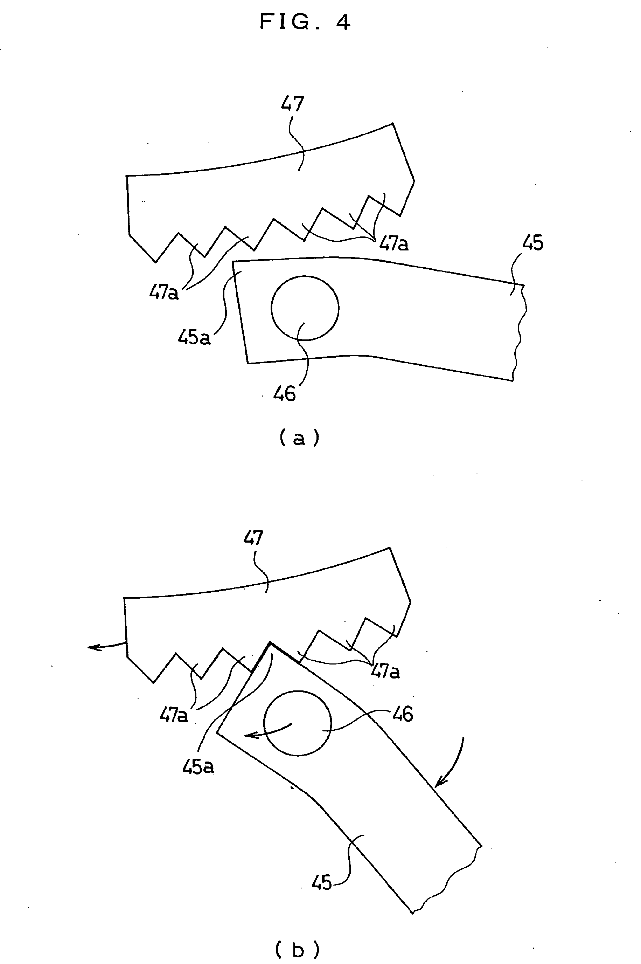

One end of a V-shaped engaging-and-connecting lever 45 is pivotably supported on the other end of the first lever member 2a₁, not on the end thereof that is on the engaging member 15 side by a pivot shaft 46. A latched pawl 45a is formed at one end of the engaging-and-connecting lever 45, as shown in Fig. 4(a). The other end of the engaging-and-connecting lever 45 abuts against the longer linear portion 43b of the L-shaped member 43 when the engaging means 15 of the first lever member 2a₁ is abutting against the angular portion of the linear portions 43a and 43b of the L-shaped member 43, as shown in Fig. 1, whereas it disengages from the linear portion 43b of the L-shaped member 43 when the engaging means 15 has shifted from the angular portion of the L-shaped member 43 along the linear portion 43b, as shown in Fig. 3(b). The engaging-and-connecting lever 45 is located at a position spaced above the shaft 37 when it is abutting against the L-shaped member 43, as shown in Fig. 1. As shown in Fig. 3(a), the engaging-and-connecting lever 45 pivots clockwise in the figure by its own weight, with the pivot shaft 46 being the center, to abut against the shaft 37 when it disengages from the linear portion 43b of the L-shaped member 43.

As shown in Figs. 1 and 2(a), the second lever member 2a₂ is equipped with a catch member 47 composed of an arc-shaped plate-like member so as to oppose the latch pawl 45a. As shown in Figs. 4 (a) and 4(b), on the surface of the catch member 47 opposing the latch pawl 45a, a predetermined number of teeth 47a onto which the latch 45a can latch is formed. When the engaging-and-connecting lever 45 abuts against the L-shaped member 43, the latch pawl 45a comes apart from the teeth 47a and does not latch on these teeth 47a so that the first lever member 2a₁ and second lever member 2a₂ are not connected with each other, as shown in Fig. 4(a). When the connecting lever 45 disengages from the L-shaped member 43 and pivots by its own weight, the latch pawl 45a latches onto the teeth 47a, whereby the first lever member 2a₁ and the second lever member 2a₂ are connected with each other and pivot unitarily, as shown in Fig. 4(b).

Although in the foregoing example, two lever members, the third and the fourth lever members 2a₄ and 2a₅ are provided as the lever members for connecting the second lever member 2a₂ to the input shaft 3a, one or more of any number of lever members may be provided in the invention.

The other structures of the brake apparatus 1 of this example are identical to the previously-described conventional example.

In the inoperative condition, the thus-configured brake pedal apparatus 50 of the brake apparatus 1 of this example is in an inoperative condition shown in Fig. 1, wherein: the pin-shaped engagingmeans 15 is kept abutting against the angular portion of the L-shaped member 43 by the spring force of the torsion spring 44; a stop portion 2a₈ abuts onto the first pivot shift 11; and further, the other end of the engaging-and-connecting member 45 (the end opposite the latch pawl 45a) abuts onto the linear portion 43b of the L-shaped member 43 so that the latch pawl 45a does not latch onto the teeth 47a of the catch member 47.

When the brake pedal 2 is depressed in a normal manner from this inoperative condition, the pedal force Fₚ does not reach the set value Fₚ₀ and the pedal-ratio change condition is not established; therefore, the first lever member 2a₁ does not pivot, as in the previously-described conventional example, and the engaging means 15 is kept abutting onto the angular portion of the L-shaped member 43. That is, the engagement relation is maintained between the engaging means 15 and the L-shaped member 43. Therefore, the L-shaped member 43 does not pivot and the engaging-and-connecting lever 45 is kept in the inoperative condition.

Then, only the second lever member 2a₂ pivots clockwise in Fig. 1, with the second pivot shaft 13 being the center. Consequently, the third lever member 2a₄ pivots counterclockwise via the fourth lever member 2a₅, with the shaft 37 being the center, and the input shaft 3a strokes forward, causing the booster 3 to actuate and thus operating a normal brake. When the brake pedal 2 is released, each of the lever members 2a₄, 2a₅, and 2a₂ pivots in an opposite, inoperative direction, and the brake pedal apparatus 50 enters an inoperative condition shown in Fig. 1, whereby the normal brake is cancelled.

For example, when the brake pedal 2 is depressed more strongly than in a normal brake operation because of emergency braking or the like, the pedal force Fₚ is the set value Fp₀ or higher, that is, the pedal-ratio change condition is established. Consequently, as in the previously-described conventional example, the first lever member 2a₁ pivots clockwise with the first pivot shaft 11 being the center, as shown in Figs. 3(a) and 3(b). Thereby, the engaging means 15 shifts from the angular portion of the linear portion 43b of the L-shaped member 43 while keeping abutment with this linear portion 43b and causing this L-shaped member 43 to pivot counterclockwise, cancelling the engagement relation between the engaging means 15 and the L-shaped member 43.

At this time, the engaging means 15 shifts directly from the linear portion 43b at the angular portion, abutting to the linear portion 43b in which the contact angle changes simply and continuously and does not change abruptly, and therefore, the friction force generated in the cancellation of the engagement relation between the engaging means 15 and the L-shaped member 43 is small. Thus, the resistance caused by the friction force is reduced in the shift of the engaging means 15, that is, the pivoting of the first lever member 2a₁. The engaging means 15 smoothly shifts, and few variation or pedal shock occurs when canceling the engagement relation between the engaging means 15 and the retaining portion 41, that is, when changing the pedal ratio.

Moreover, since the L-shaped member 43 tends to move away from the other end of the "V"-shaped engaging-and-connecting lever 45 by the counterclockwise pivoting of the L-shaped member 43, the engaging-and-connecting lever 45 pivots clockwise in Fig. 1 by its own weight, with the pivot shaft 46 being the center. When the other end of the engaging-and-connecting lever 45 comes apart from the L-shaped member 43, the engaging-and-connecting lever 45 further pivots by its own weight, abutting onto the pivot shaft 37 and causing the latch pawl 45a to latch onto the teeth 47a. That is, at the stage where the engagement relation is cancelled between the engaging means 15 and the L-shaped member 43, the latch pawl 45a latches onto the teeth 47a and the first lever member 2a₁ and the second lever member 2a₂ are unified each other.

At this time, the other end of the engaging-and-connecting lever 45 abuts against the linear portion 43b in which the contact angle with the L-shaped member does not abruptly change only by the own weight of the engaging-and-connecting lever 45, and the engaging-and-connecting lever 45 pivots only by its own weight when the other end of the engaging-and-connecting lever 45 disengages from the linear portion 43b; therefore, there is little resistance in the pivoting of the engaging-and-connecting lever 45, and the latching between the latch pawl 45a and the teeth 47a is performed smoothly. Consequently, few variation or pedal shock occurs at the time of the latching between this latch pawl 45a and the teeth 47a.

Moreover, the latching between the latch pawl 45a and the teeth 47a is achieved before the first lever member 2a₁ abuts onto the stop portion 2a₈ of the pivot shaft 11. Then, the pedal ratio is changed by unification of the two lever members 2a₁ and 2a₂.

Furthermore, the second lever member 2a₂ also pivots in the same direction, with a connecting shaft 2a₇ being the center, and at this time, the first lever member 2a₁ and the second lever member 2a₂ tend to shift toward a balanced position, as in the foregoing conventional example. However, since the latch pawl 45a latches onto the teeth 47a so that the first lever member 2a₁ and the second lever member 2a₂ are unified with each other as discussed above, the first pivot shaft 11 does not abut directly on the stop portion 2a₈, which is away from the first pivot shaft 11.

Consequently, when the first lever member 2a₁ and the second lever member 2a₂ are unified, little contact noise is produced. When considering the shift of the first lever member 2a₁ and the second lever member 2a₂ to the balanced position after the cancellation of the engagement relation between the engaging means 15 and the L-shaped member 43 with respect to the pedal ratio change, the pedal ratio changes from a pedal ratio before the pedal ratio change to a pedal ratio at the time when the latch pawl 45a latches onto the teeth 47a and the first lever member 2a₁ and the second lever member 2a₂ are unified. This pedal ratio at the time when the latch pawl 45a latches to the teeth 47a results nearly in a desired pedal ratio since there is few relative shift between the first lever member 2a₁ and the second lever member 2a₂. Therefore, even when the pedal ratio is changed, few pedal shock occurs.

The pedal ratio that is changed by the unification of the first lever member 2a₁ and the second lever member 2a₂ results in a large pedal ratio. That is, the MCY pressure is made to have so-called inverse two-stage characteristics, wherein, as the pedal force Fₚ increases, the MCY pressure increases at a larger boosting ratio than the conventional boosting ratio.

In addition, even in a boosting power failure by the booster 3, the pedal ratio is changed likewise and is made large when the pedal force Fₚ is the pedal force Fₚₐ or higher, which is a set value Fₚ₀. Therefore, the MCY pressure linearly increases at a considerably greater value than it increases conventionally, in accordance with the increased pedal ratio so that the braking force is assisted.

The pedal stroke-pedal ratio profile of the brake pedal apparatus 50 in this example results in the same profile as the foregoing profile shown in Fig. 7(a) when the latch pawl 45a of the engaging-and-connecting lever 45 does not latch onto the teeth 47a of the retaining member 47, whereas it results in the same profile as the profile shown in the Fig. 7 (b) when the latch pawl 45a latches onto the teeth 47a of the retaining member 47.

In the brake pedal apparatus 50 in this example, the resistance caused by the shift of the engagingmeans 15 is reduced at the time of cancellation of the engagement relation between the engaging means 15 and L-shaped member 43 when changing the pedal ratio; therefore, the engaging means 15 can be shifted smoothly, and both variation and pedal shock can be suppressed in the cancellation of the engagement relation between the engaging means 15 and the retaining portion 41. Moreover, the contact noise generated at the time of the unification of the first lever member 2a₁ and the second lever member 2a₂ can be prevented. Furthermore, since the pedal ratio at the time of the unification of the first lever member 2a₁ and the second lever member 2a₂ can be made nearly a desired pedal ratio, the pedal shock associated with the changing of the pedal ratio can be prevented.

Thus, the brake pedal apparatus 50 of this example makes it possible to obtain a better pedal feel in changing the pedal ratio than in the conventional example.

Moreover, since the latch pawl 45a of the engaging-and-connecting lever 45 latches onto the teeth 47a of the retaining member 47, the pedal ratio can be changed with a simple structure.

Furthermore, because the torsion spring 44 is adopted as the spring for urging the L-shaped member 43, it requires smaller space to install in comparison with the coil spring in the previously-mentioned conventional example.

The other operations and advantages of the brake apparatus 1 of this example are the same as those of the foregoing brake apparatus 1 of the conventional example.

It is also possible to employ other latching means such as a groove, in place of the teeth 47a of the retaining member 47. In place of the linear portion 43b of the L-shaped member 43, an arc-shaped portion may be formed. In that case, it is desirable that the radius of curvature of the arc-shaped member should be relatively large.

In addition, although the brake pedal apparatus 50 in each of the examples adopts the negative booster 3, it is possible to use a booster or a pressure source that uses other power sources, such as liquid pressure or air pressure.

Further, although each of the foregoing examples uses the booster 3, it is not necessary to use the booster 3 and it is also possible to connect the input shaft of the master cylinder 4 (for operating the piston of the master cylinder 4) directly to the second lever member 2a₂.

### INDUSTRIAL APPLICABILITY

The brake pedal apparatus according to the invention can be suitably applied to the brake pedal apparatus of the brake apparatus for vehicles such as automobiles.

## Claims

1. A brake pedal apparatus comprising: a first lever member whose mid portion is pivotably supported on a vehicle body by a first pivot shaft; a second lever member having a pedal on an end thereof and being relatively pivotably connected to an end of the first lever member by a second pivot shaft, to which an input shaft of a booster or of a master cylinder is pivotably coupled; a pivot-inhibiting control means for controlling pivoting of the first lever member so that the first lever member is inhibited from pivoting when a predetermined condition is not established while the first lever member is permitted to pivot when the predetermined condition is established; and a joining means for causing the second lever member to pivot together with the first lever member, with the first pivot shaft being a pivot center, when the first lever member is permitted to pivot, the brake pedal apparatus **characterized in that**:
the pivot-inhibiting control means comprises an engaging means provided on the first lever member, and a shift-inhibiting control means having an abutting surface onto which the engaging means abuts and being for inhibiting the engaging means from shifting so as to keep its engagement with the engaging means when the predetermined condition is not established, and for permitting the engaging means to shift so as to cancel its engagement with the engaging means when the predetermined condition is established and
the abutting surface of the shift-inhibiting control means is an abutting surface whose shape does not change abruptly.

2. The brake pedal apparatus as set forth in claim 1, **characterized in that**:
the joining means includes a catch member provided on the first lever member and a connecting member provided on the second lever member and being latchable onto the catch member and
the connecting member is configured to be controlled by the shift-inhibiting control means so that it does not latch onto the catch member when the predetermined condition is not established while it latches onto the catch member when the predetermined condition is established.

3. The brake pedal apparatus as set forth in claim 3, **characterized in that**:
the catching member has a predetermined number of tooth (teeth) or groove(s), and the connecting member is provided pivotably on the second lever member and includes an engaging-and-connecting lever having a latch pawl being latchable with the tooth (teeth) or the groove(s) and
the engaging-and-connecting lever is controlled by the shift-inhibiting control means so that the engaging-and-connecting lever is set at a position such that the latch pawl does not latch with the tooth (teeth) or groove (s) when the predetermined condition is not established, while the engaging-and-connecting lever is set at a position such that the latch pawl latches with the tooth (teeth) or groove (s) when the predetermined condition is established.
